# EUROPÄISCHE PATENTSCHRIFT

(11) **EP 3 018 309 B1**
(45) Veröffentlichungstag und Bekanntmachung des Hinweises auf die Patenterteilung: **27.03.2019**
(21) Anmeldenummer: 15002450.3
(22) Anmeldetag: 24.04.2013
(51) Int. Cl.: F01N 3/00, F01N 11/00, F01N 13/16, G01K 7/36, G01K 11/12, G01N 27/00, G01N 27/82, G01R 33/00

(54) **ABGASNACHBEHANDLUNGSSYSTEM FÜR BRENNKRAFTMASCHINEN**
WASTE GAS TREATMENT SYSTEM FOR COMBUSTION ENGINES
SYSTEME DE TRAITEMENT DES GAZ D'ECHAPPEMENT POUR DES MOTEURS A COMBUSTION INTERNE

(30) Priorität: 04.07.2012 DE 102012013221
(43) Veröffentlichungstag der Anmeldung: 11.05.2016
(62) Teilanmeldung aus: 13002150.4
(73) Patentinhaber: MAN Truck & Bus AG, 80995 München (DE)
(72) Erfinder: Döring, Andreas, 82008 München (DE); Rothe, Dieter, 90403 Nürnberg (DE)
(74) Vertreter: Liebl, Thomas

(56) Entgegenhaltungen:
- DE-A1- 19 932 035
- DE-B3-102006 049 717
- US-A1- 2009 097 528
- US-B1- 8 177 423

## Beschreibung

Die Erfindung betrifft ein Abgasnachbehandlungssystem mit einem Katalysator und/oder mit einer anderen Abgasnachbehandlungseinheit für den Einsatz im Abgasstrom von Brennkraftmaschinen.

Zur Reduzierung der Emissionen von Brennkraftmaschinen, insbesondere von Verbrennungsmotoren in Kraftfahrzeugen, werden Abgasnachbehandlungssysteme eingesetzt, die Partikelfilter und/oder Katalysatoren als Abgasnachbehandlungseinheiten verwenden. Diese Abgasnachbehandlungseinheiten haben einen temperaturabhängigen Wirkungsgrad und können bei zu hohen Betriebstemperaturen auch irreversibel beschädigt oder auch vollständig unbrauchbar werden.

Bei einem Partikelfilter kann beispielsweise eine Rußoxidation optimal bei ca. 370° C ablaufen. Liegen dagegen die Betriebstemperaturen unterhalb von 230° C kann keine sichere Funktion des Partikelfilters sichergestellt werden. Dies kann bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auftreten. Durch die Zugabe von Kohlenwasserstoffen kann hier eine gezielte Temperaturerhöhung vorgenommen werden, um in einen optimalen Betriebstemperaturbereich zu gelangen.

Grundsätzlich besteht beim Betrieb der Abgasnachbehandlungseinheiten die Gefahr, dass beispielsweise durch exothermes Abbrennen des kohlenstoffhaltigen Rußes ein Temperaturanstieg bis auf 1000° C und damit eine Schädigung der Abgasnachbehandlungseinheit beziehungsweise nachgeschalteter Katalysatoren kommen kann. Auch der Einsatz von V₂O₅ als Aktivmaterial für einen SCR-Katalysator kann Probleme aufwerfen, wenn die Abgastemperatur am SCR-Katalysator über 650° C liegt, da V₂O₅ dann sublimiert. Bei derartigen Partikelfiltern mit V₂O₅ als Aktivmaterial können unkontrollierte Temperaturspitzen auftreten und den Partikelfilter schädigen.

Prinzipiell kann festgehalten werden, dass, insbesondere bei einer katalytischen Beschichtung des Partikelfilters darauf geachtet werden muss, dass bestimmte maximale Temperaturen nicht überschritten werden.

Neben Kohlenstoff sammelt sich auch Asche an, die bei der Verbrennung von Motoröl und/oder Kraftstoff, hier speziell sogenannter Biokraftstoffe, im Partikelfilter anfällt. Daher muss dieser turnusmäßig aus dem Fahrzeug ausgebaut und gereinigt werden. Dies läuft üblicherweise so ab, dass nach dem Ausbau der Filter in einem Ofen ausgebrannt wird, um eventuell noch enthaltenen Russ zu entfernen. Anschließend wird die Asche mir Hilfe von Druckluft ausgeblasen oder mit Hilfe von Wasser ausgewaschen.

Da die Reinigung sehr zeitintensiv ist und erhebliche Investitionen in die Reinigungseinrichtungen voraussetzt, werden die Filter oft nicht sofort gereinigt, sondern gegen einen zweiten Filter getauscht. Die ausgebauten Filter werden meist zentral gesammelt, gereinigt und als Tauschfilter dem Kreislauf wieder zur Verfügung gestellt.

Allerdings besteht dabei das Problem, dass bevor der Filter wieder in den Kreislauf eingeschleust werden kann, eine aufwändige Analyse des Filters, speziell auf zu hohe Betriebstemperaturen, die zu einer Beschädigung des Filters und/oder darauf aufgebrachter katalytischer Beschichtungen geführt haben können, erfolgen muss. Um Risse innerhalb des Filters, die durch zu hohe Temperaturspannungen entstanden sind, erkennen zu können, wird zum Beispiel Röntgen oder Computertomographie angewendet. Um zu überprüfen, ob die katalytische Beschichtung beschädigt ist, sind aufwändige Messungen, insbesondere Aktivitätsmessungen mit Hilfe von Modellgasanlagen, notwendig.

Aus der EP 1 560 009A1 ist ein Temperaturindikator für die Anwendung im Lebensmittelbereich bekannt, der insbesondere zur Überwachung der "Kühlkette" dient.

Die weitere US 2009/097528 A1 offenbart eine Vorrichtung zur Erfassung von Temperaturüberschreitungen in einer Abgasnachbehandlungseinheit, bei der ein temperaturempfindliches Element an einem hinsichtlich auftretenden Temperaturen zu überwachenden Bereich der Abgasnachbehandlungseinheit angeordnet ist. Dieses temperaturempfindliche Element weist ein temperaturempfindliches Material auf, das bei einer vorgegebenen Grenztemperatur schmilzt. Zudem ist hier eine Überwachungseinheit vorgesehen, die das Schmelzen des temperaturempfindlichen Elements erfasst.

Aus der US 8 177 423 B1 ist eine Sensorik bekannt, bei der eine Vielzahl von separaten Sensorelementen in der Umgebung eines Gegenstands angeordnet ist. Jedes dieser Sensorelemente weist ein unterschiedliches unbeständiges Material auf, welches sich bei einer Temperaturbelastung fortwährend ändert.

Die weitere DE 199 32 035 A1 offenbart eine Materialkombination und ein Verfahren zur Aufzeichnung von Oberflächentemperaturverteilungen, bei dem auf eine flexible Trägerfolie ein feinstrukturiertes magnetisches Material mit definiertem Curiepunkt und definierter Temperaturabhängigkeit seiner magnetischen Eigenschaften aufgebracht wird.

Aus der DE 10 2006 049 717 B3 ist ein Verfahren zur kontaktlosen Ermittlung der Temperatur an vorzugsweise unzugänglichen Orten bekannt, bei dem an dem Messort ein Element platziert wird, dessen Eigenschaften sich in Abhängigkeit von der auf dieses einwirkenden Temperatur ändern. Dieses Element besteht hier aus einer ferromagnetischen Substanz, welches zu jeder Temperaturerfassung durch ein Magnetfeld aufmagnetisiert wird.

Es ist Aufgabe der Erfindung, ein Abgasnachbehandlungssystem anzugeben, das eine einfache Möglichkeit bietet, Beschädigungen durch aufgetretene zu hohe Betriebstemperaturen an einem Partikelfilter oder Katalysator erkennen zu können.

Gelöst wird die Aufgabe durch ein Abgasnachbehandlungssystem mit den Merkmalen des Patentanspruches 1. Besonders vorteilhafte Weiterbildungen des Abgasnachbehandlungssystems sind in den Unteransprüchen offenbart.

Gemäß Patentanspruch 1 wird ein Abgasnachbehandlungssystem mit einem Katalysator und/oder mit einer anderen Abgasnachbehandlungseinheit für den Einsatz im Abgasstrom von Brennkraftmaschinen vorgeschlagen, wobei wenigstens ein temperaturempfindliches Element, welches wenigstens teilweise aus temperaturempfindlichem Material besteht, an wenigstens einem hinsichtlich auftretender Temperaturen zu überwachenden Bereich der Abgasnachbehandlungseinheit angebracht ist, und dass das temperaturempfindliche Material bei wenigstens einer vorgegebenen Grenztemperatur seine Eigenschaft dauerhaft detektierbar ändert. Erfindungsgemäß ändert das temperaturempfindliche Material ab der vorgegebenen Grenztemperatur seine magnetischen Eigenschaften. Wesentlich ist dabei, dass die detektierbaren Änderungen am temperaturempfindlichen Material dauerhaft sind, damit zu einem beliebigen späteren Zeitpunkt geprüft werden kann, ob eine oder gegebenenfalls auch mehrere vorgegebene Temperaturgrenzen überschritten wurden. Das jeweilige temperaturempfindliche Element kann aus mehreren Materialkomponenten bestehen, so dass beispielsweise eine Materialkomponente einen niedrigeren Temperaturgrenzwert und die andere Materialkomponente einen höheren Temperaturgrenzwert durch eine Materialveränderung anzeigen kann.

Erfindungsgemäß ist das temperaturempfindliche Element durch wenigstens eine katalytisch aktive Komponente gebildet. Alternativ ist das temperaturempfindliche Element Bestandteil eines Substrats, dergestalt, dass dem Substratgrundstoff das temperaturempfindliche Material zugemischt ist.

Erfindungsgemäß werden magnetische Werkstoffe für das Element verwendet, die Informationen über die Temperaturhistorie enthalten beziehungsweise anzeigen. Dabei ist das Material so zu wählen, dass es seine Magnetisierung, die es vor dem Verbau in den Abgastrakt aufgeprägt bekam (Permanentmagnet), ab der gewünschten Temperatur verliert. Die Stärke des Magnetfelds des Elements kann anschließend mit Hilfe von geeigneten Detektoren und daraus das Überschreiten einer festgelegten Temperatur bestimmt werden. Die Temperatur, bei der ein ferromagnetischer Stoff seine Magnetisierung verliert, wird als Curie-Temperatur bezeichnet und ergibt sich für
- Kobalt zu 1395°C,
- Eisen zu 1033°C,
- Nickel zu 627°C,
- Aluminium-Nickel-Kobalt-Legierungen zu ca. 550°C,
- Neodym-Eisen-Bor zu 60-200°C,
- Nickel zu 360°C,
- Ferrite zu 100-460°C.

Außer den oben aufgeführten Materialen können auch Stahl und Bismut-Mangan-Legierungen eingesetzt werden.

In besonderem Maße hat sich allerdings die Anbringung von temperaturempfindlichem Material zur Überwachung der Temperatur auf den Stirnseiten, also der An- und/oder Abströmfläche, der Komponenten zur Abgasnachbehandlung, also den Katalysatoren und/oder Partikelfiltern, bewährt. Da Wärmeübergänge auf andere Teile an dieser Position zu vernachlässigen sind, gelingt eine besonders genaue Bestimmung der Substrattemperatur beziehungsweise Katalysatortemperatur.

Die Temperaturüberwachung eines Katalysators beziehungsweise eines sonstigen Bauelements des Abgasnachbehandlungssystems kann mit Hilfe der Entmagnetisierung von permanentmagnetischem Material so erfolgen, dass die Ausrichtung und/oder die Stärke des Magnetfelds im Frischzustand des Bauelements dokumentiert wird und die während der Überprüfung ermittelten Werte mit diesen dokumentierten verglichen werden. Dabei können unterschiedliche Bereiche des Bauelements auch unterschiedlich magnetisiert werden.

Außerdem kann vorgesehen sein, dass die Magnetisierung im Frischzustand sich entlang des Querschnitts des Bauelements ändert.

Erfindungsgemäß wird ein Temperaturindikator bereits während der Produktion des Katalysators dem Katalysatorgrundmaterial zugegeben. Die Erfindung wird nachfolgend anhand von in der Zeichnung dargestellten Ausführungsbeispielen näher erläutert.

Es zeigen:
- Fig. 1: einen Wabenkörper eines Katalysators mit auf dem Substrat aufgebrachtem temperaturempfindlichen Elementen,
- Fig. 2: einen aus temperaturempfindlichem Material dargestellten Barcode,
- Fig. 3: eine Seitenansicht eines in einen Abgasstrom einer Brennkraftmaschine eingesetzten Katalysators mit magnetisiertem Material und mit einem Hall-Sensor als Detektor,
- Fig. 4: eine Ansicht der Stirnseite eines Katalysatorsubstrats mit homogener Magnetisierungsrichtung,
- Fig. 5: eine Ansicht der Stirnseite eines Katalysatorsubstrats mit homogener Magnetisierungsrichtung und einem auf Grund von Übertemperatur entmagnetisierten Bereich,
- Fig. 6: eine Ansicht der Stirnseite eines Katalysatorsubstrats mit Bereichen unterschiedlicher Magnetisierungsrichtungen, und
- Fig. 7: eine Seitenansicht eines in einen Abgasstrom einer Brennkraftmaschine eingesetzten Katalysators mit mehreren magnetisierten Bereichen entlang der Strömungsrichtung.

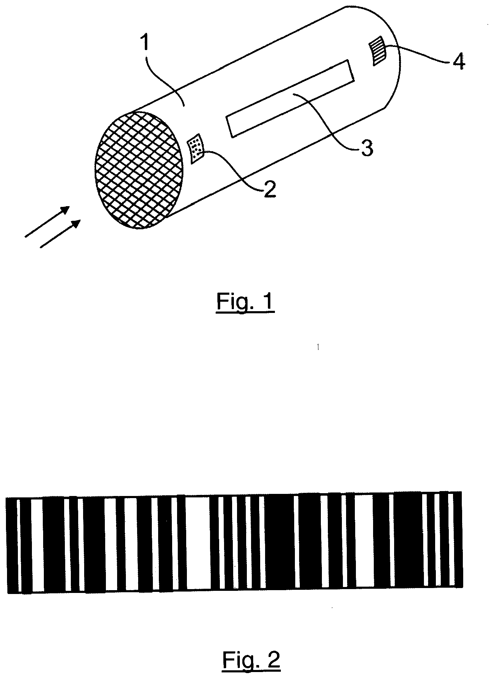

Der in Figur 1 dargestellte Wabenkörper 1 eines Katalysators wird in Pfeilrichtung von dem zu reinigenden Abgas durchströmt, wobei aufgrund ablaufender chemischer Reaktionen hohe Betriebstemperaturen im Wabenkörper 1 auftreten können. Das Grundmaterial des Wabenkörpers 1 besteht aus Keramik und kann auch als Substrat 11 bezeichnet werden, an dessen Umfangsfläche an drei Bereichen temperaturempfindliche Elemente 2, 3, 4 aus unterschiedlichen temperaturempfindlichen Materialien beispielhaft aufgebracht sind. Im mittleren Bereich ist das temperaturempfindliche Element 3 als langgestreckter Streifen auf den Wabenkörper 1 aufgebracht, wodurch eine Temperaturüberwachung über einen größeren Bereich möglich ist. Dieser besteht aus einer ab einer bestimmten Temperatur ihre magnetischen Eigenschaften verändernden Substanz. Im Eingangsbereich ist ein nicht erfindungsgemäßes, als 2D-Code aufgebrachtes temperaturempfindliches Element 2 aufgebracht, während im Endbereich ein ebenfalls nicht erfindungsgemäßes temperaturempfindliches Element 4 einen Barcode darstellt.

Die aufgebrachten temperaturempfindlichen Elemente 2, 3, 4 können für unterschiedliche Grenztemperaturen ihre Materialeigenschaft ändern, das heißt dass auftretende Materialänderungen auf die Überschreitung unterschiedlicher Grenztemperaturen hinweisen.

In der nicht erfindungsgemäßen Figur 2 ist ein Barcode beispielhaft dargestellt, dessen helle und dunkle Linien von unterschiedlichen temperaturempfindlichen Materialien gebildet werden können und können auch über einen längeren Bereich, beispielsweise über nahezu die gesamte Länge eines Wabengrundkörpers eines Katalysators, angebracht sein. Damit kann dann über die gesamte, mit temperaturempfindlichem Material versehene Fläche eine Temperaturüberwachung durch ein Auslesen der Barcodeinformation sehr einfach erfolgen.

Das temperaturempfindliche Material kann wenigstens teilweise als permanentmagnetisches Material ausgeführt sein, das ab einer bestimmten Temperatur seine Magnetisierung verliert. Dieses temperaturempfindliche Material besteht dabei wenigstens teilweise aus:
- Kobalt,
- Eisen,
- Nickel,
- Samarium
- Samarium-Kobalt
- Aluminium-Nickel-Kobalt-Legierungen,
- Neodym-Eisen-Bor,
- Nickel,
- Neodym,
- Ferrit,
- Heusler-Legierungen, insbesondere Co₂MnSi, Ni₂Mnln, Co₂CrGa, CoTiAl oder Cu₂MnAlStahl und/oder
- Bismut-Mangan-Legierungen

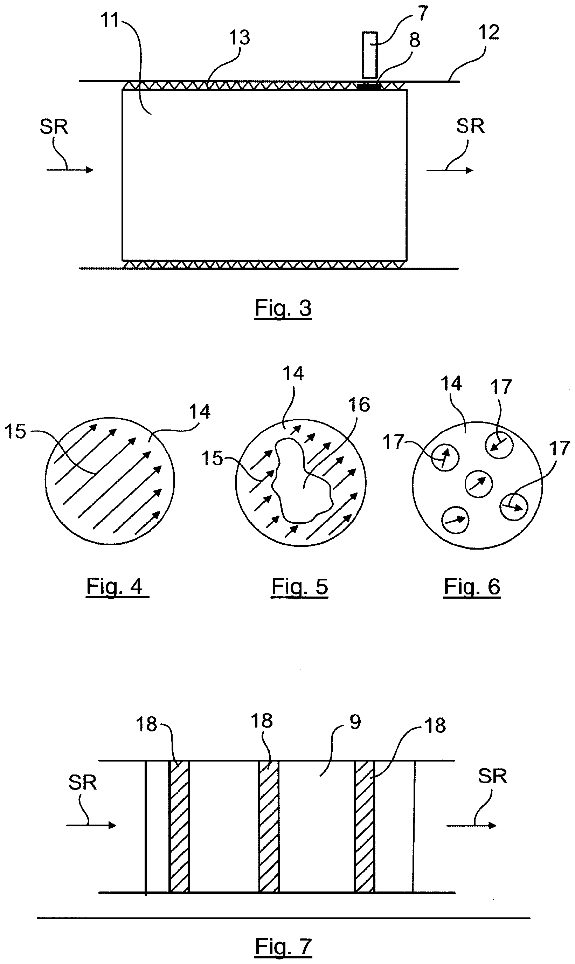

Das temperaturempfindliche magnetische Material 8 kann, wie in Figur 3 dargestellt, in Form einer Schicht auf das Substrat 11 des Katalysators 9 aufgebracht und über Sintervorgänge beziehungsweise Kalziniervorgänge auf diesem fixiert werden.

Um eine Manipulation infolge einer Nachmagnetisierung zu verhindern, bietet es sich an, die Feldstärke und/oder die Ausrichtung des Magnetfelds im Frischzustand zu dokumentieren und gegebenenfalls elektronisch abzuspeichern. Beim Auslesen der Feldstärke und/oder der Ausrichtung des Magnetfelds nach oder während des Betriebs des Nachbehandlungssystems kann der ausgelesene Wert mit dem dokumentierten verglichen werden. Stimmen diese nicht überein, kann auf eine Manipulation beziehungsweise Beschädigung geschlossen werden. Insbesondere die Ausrichtung des Magnetfelds bietet sich als Marker für Manipulationen an.

Die Vermessung des Magnetfelds ist Stand der Technik und kann zum Beispiel mit Hilfe von Hall-Sensoren erfolgen.

Eine weitere Möglichkeit das permanentmagnetische Material auf das Substrat aufzubringen, besteht darin, es dem eigentlichen Katalysator- oder Substratgrundstoff zuzumischen und die Magnetisierung nach Fertigstellung der jeweiligen Komponenten aufzuprägen. Dies bietet sich beispielsweise bei der Verwendung von metallischen Katalysator- oder Filtersubstraten an. Werden diese aus ferromagnetischem Material, wie zum Beispiel ferritischem Edelstahl, hergestellt, kann dieses magnetisiert und anschließend dessen Magnetisierung zur Detektion einer Übertemperatur bestimmt werden.

Da metallische Katalysator- und Partikelfiltersubstrate aus einzelnen Folien aufgebaut sind, die gewellt und aufgerollt werden, bietet sich die Möglichkeit, vor und/oder während des Aufrollens, die Folien nur lokal zu magnetisieren. Dies bietet mehrere Vorteile: Zum einen können so Zonen mit unterschiedlicher Magnetisierung ausgebildet werden (Manipulationssicherheit), die Magnetisierung kann über den kompletten Querschnitt identisch oder auch variabel, insbesondere geringere Magnetisierung in den kälteren Randbereichen, ausgeführt werden, auf einen großen Magneten zur Magnetisierung des kompletten Bauteils kann verzichtet werden, die Magnetisierung und das Aufrollen können in einem Arbeitsschritt erfolgen und die Magnetisierung ist deutlich definierter.

Insbesondere bei der Detektion von Übertemperaturen in der Nähe der Stirnflächen bietet sich das Verfahren der Magnetisierung an. Fig. 4 zeigt die Magnetisierung einer Katalysatoraustrittsstirnfläche 14. Die Feldlinien 15 verlaufen parallel. Kommt es lokal zu einer Überhitzung, werden Teilbereiche 16 entmagnetisiert, wie dies in Fig. 5 dargestellt ist. Die Vermessung dieses Sachverhalts kann sehr einfach automatisiert, beispielsweise durch Kombination eines als Hall-Sensor ausgebildeten Detektors mit einer automatischen Traversiervorrichtung, erfolgen. Auch eine Quantifizierung ist möglich, was bei der Verwendung von Thermofarben im Abgas oft recht schwierig ist, da sich deren Farbe durch andere Abgasbestandteile, wie Ruß oder Schwefel verändern kann.

Die Feldlinien müssen nicht notgedrungen parallel verlaufen, sondern es kann aus Gründen der Manipulationssicherheit auch sinnvoll sein, einzelne Teilbereiche, wie in Figur 6 dargestellt, mit unterschiedlichen Ausrichtungen 17 des Magnetfelds auszubilden, deren Anordnung und Ausrichtung im Frischzustand zu dokumentieren und später mit dem gebrauchten Katalysator zu vergleichen. Die Anordnung der Teilbereiche kann zusätzlich auch mit beispielsweise Thermofarben und/oder Barcodes überwacht werden.

Es ist auch denkbar, wenigstens eine katalytisch aktive Komponente nach deren Aufbringen als Katalysatorbeschichtung auf einen keramischen oder metallischen Träger bzw. einem Kalzinieren des Katalysators zu magnetisieren, so dass diese bei einer definierten Temperaturbeaufschlagung entmagnetisiert wird sowie gegebenenfalls verdampft und damit das temperaturempfindliche Element ausbildet. Als Beispiel seien hier eisen- oder kobalthaltige SCR-Katalysatoren auf Zeolithbasis genannt.

Figur 7 zeigt eine Seitenansicht eines in einen Abgasstrom einer Brennkraftmaschine eingesetzten Katalysators 9 mit mehreren magnetisierten Bereichen 18.

## Patentansprüche

1. Abgasnachbehandlungssystem mit einem Katalysator (9) und/oder mit einer anderen Abgasnachbehandlungseinheit für den Einsatz im Abgasstrom von Brennkraftmaschinen, wobei wenigstens ein temperaturempfindliches Element (3, 8), welches wenigstens teilweise aus temperaturempfindlichem Material besteht, an wenigstens einem hinsichtlich auftretender Temperaturen zu überwachenden Bereich der Abgasnachbehandlungseinheit vorgesehen ist, und dass das temperaturempfindliche Material bei wenigstens einer vorgegebenen Grenztemperatur seine Eigenschaft dauerhaft detektierbar ändert, **dadurch gekennzeichnet,**
**dass** das temperaturempfindliche Material ab der vorgegebenen Grenztemperatur seine magnetischen Eigenschaften ändert, und
**dass** das temperaturempfindliche Element (3, 8) durch wenigstens eine katalytisch aktive Komponente gebildet ist oder Bestandteil eines Substrats ist, dergestalt, dass dem Substratgrundstoff das temperaturempfindliche Material zugemischt ist.

2. Abgasnachbehandlungssystem nach Anspruch 1, **dadurch gekennzeichnet, dass** das durch die wenigstens eine katalytisch aktive Komponente gebildete temperaturempfindliche Element so ausgebildet ist, dass dieses nach dessen Aufbringen als Katalysatorbeschichtung auf einen keramischen oder metallischen Träger magnetisiert wird, so dass dieses bei einer definierten Temperaturbeaufschlagung entmagnetisiert wird.

3. Abgasnachbehandlungssystem nach Anspruch 1 oder 2, **dadurch gekennzeichnet, dass** das durch die wenigstens eine katalytisch aktive Komponente gebildete temperaturempfindliche Element so ausgebildet ist, dass dieses nach einem Kalzinieren des Katalysators magnetisiert wird, so dass dieses bei einer definierten Temperaturbeaufschlagung entmagnetisiert wird.

4. Abgasnachbehandlungssystem nach einem der vorhergehenden Ansprüche, **dadurch gekennzeichnet, dass** an der Abgasnachbehandlungseinheit ein Detektor (7) angeordnet ist, der eine aufgetretene Veränderung an dem temperaturempfindlichen Element (8) erfasst und/oder anzeigt.

5. Abgasnachbehandlungssystem nach einem der vorhergehenden Ansprüche, **dadurch gekennzeichnet, dass** das temperaturempfindliche Material wenigstens teilweise als permanentmagnetisches Material ausgeführt ist, das ab einer bestimmten Temperatur seine Magnetisierung wenigstens teilweise verliert oder ändert.

6. Abgasnachbehandlungssystem nach einem der vorhergehenden Ansprüche, **dadurch gekennzeichnet, dass** das temperaturempfindliche Material permanentmagnetisches Material ist, dessen Ausrichtung und/oder Stärke des Magnetfelds als Temperaturindikator dient.

7. Abgasnachbehandlungssystem nach einem der vorhergehenden Ansprüche, **dadurch gekennzeichnet, dass** unterschiedliche, bezüglich der Temperatur zu überwachende Bereiche unterschiedlich magnetisiert sind.

8. Abgasnachbehandlungssystem nach einem der vorhergehenden Ansprüche, **dadurch gekennzeichnet, dass** die Magnetisierung im Frischzustand entlang des Querschnitts eines zu überwachenden Bereichs querschnittsabhängig unterschiedlich ausgebildet ist.

## Claims

1. Exhaust-gas aftertreatment system having a catalytic converter (9) and/or having some other exhaust-gas aftertreatment unit for use in the exhaust-gas stream of internal combustion engines, wherein at least one temperature-sensitive element (3, 8), which is composed at least partially of temperature-sensitive material, is provided at at least one region, which is to be monitored with regard to prevailing temperatures, of the exhaust-gas aftertreatment unit, and in that the temperature-sensitive material permanently detectably changes its property at at least a predefined threshold temperature,
**characterized**
**in that** the temperature-sensitive material changes its magnetic properties proceeding from the predefined threshold temperature, and
**in that** the temperature-sensitive element (3, 8) is formed by at least one catalytically active component or is a constituent part of a substrate, such that the temperature-sensitive material is admixed to the substrate base material.

2. Exhaust-gas aftertreatment system according to Claim 1, **characterized in that** the temperature-sensitive element formed by the at least one catalytically active component is configured such that said element, after being applied as a catalyst coating to a ceramic or metallic carrier, is magnetized, in such a way that said element is demagnetized when subjected to a defined temperature.

3. Exhaust-gas aftertreatment system according to Claim 1 or 2, **characterized in that** the temperature-sensitive element formed by the at least one catalytically active component is configured such that said element, after calcination of the catalyst, is magnetized, such that said element is demagnetized when subjected to a defined temperature.

4. Exhaust-gas aftertreatment system according to any of the preceding claims, **characterized in that**, on the exhaust-gas aftertreatment unit, there is arranged a detector (7) which detects and/or indicates a change that has occurred to the temperature-sensitive element (8).

5. Exhaust-gas aftertreatment system according to any of the preceding claims, **characterized in that** the temperature-sensitive material is configured at least partially as permanently magnetic material which at least partially loses or changes its magnetization proceeding from a particular temperature.

6. Exhaust-gas aftertreatment system according to any of the preceding claims, **characterized in that** the temperature-sensitive material is permanently magnetic material, the orientation and/or intensity of the magnetic field of which serves as a temperature indicator.

7. Exhaust-gas aftertreatment system according to any of the preceding claims, **characterized in that** different regions which are to be monitored with regard to the temperature are differently magnetized.

8. Exhaust-gas aftertreatment system according to any of the preceding claims, **characterized in that** the magnetization in the fresh state is configured to vary in a cross-section-dependent manner along the cross section of a region to be monitored.

## Revendications

1. Système de traitement des gaz d'échappement avec un catalyseur (9) et/ou avec une autre unité de traitement de gaz d'échappement à utiliser dans un courant de gaz d'échappement de moteurs à combustion interne, dans lequel au moins un élément sensible à la température (3, 8), qui se compose au moins en partie d'un matériau sensible à la température, est prévu sur au moins une région de l'unité de traitement des gaz d'échappement à surveiller en ce qui concerne la température qui y apparaît, et en ce que le matériau sensible à la température modifie ses propriétés de façon durablement détectable à au moins une température limite prédéterminée, **caractérisé en ce que** le matériau sensible à la température modifie ses propriétés magnétiques à partir de la température limite prédéterminée, et **en ce que** l'élément sensible à la température (3, 8) est formé par au moins un composant à action catalytique ou fait partie d'un substrat, de telle manière que le matériau sensible à la température soit mélangé à la matière première du substrat.

2. Système de traitement des gaz d'échappement selon la revendication 1, **caractérisé en ce que** l'élément sensible à la température formé par ledit au moins un composant à action catalytique est réalisé de telle manière que celui-ci, après son dépôt comme revêtement de catalyseur sur un support céramique ou métallique, soit magnétisé de telle manière que celui-ci soit démagnétisé lors d'une exposition à une température définie.

3. Système de traitement de gaz d'échappement selon la revendication 1 ou 2, **caractérisé en ce que** l'élément sensible à la température formé par ledit au moins un composant à action catalytique est réalisé de telle manière que celui-ci, après une calcination du catalyseur, soit magnétisé de telle manière que celui-ci soit démagnétisé lors d'une exposition à une température définie.

4. Système de traitement de gaz d'échappement selon l'une quelconque des revendications précédentes, **caractérisé en ce qu'**un détecteur (7) est disposé sur l'unité de traitement des gaz d'échappement et détecte et/ou affiche une modification survenue à l'élément sensible à la température (8).

5. Système de traitement de gaz d'échappement selon l'une quelconque des revendications précédentes, **caractérisé en ce que** le matériau sensible à la température est produit au moins en partie sous forme de matériau magnétique permanent, qui perd ou modifie au moins en partie sa magnétisation à partir d'une température déterminée.

6. Système de traitement de gaz d'échappement selon l'une quelconque des revendications précédentes, **caractérisé en ce que** le matériau sensible à la température est un matériau magnétique permanent, dont l'orientation et/ou l'intensité du champ magnétique sert d'indicateur de température.

7. Système de traitement de gaz d'échappement selon l'une quelconque des revendications précédentes, **caractérisé en ce que** des régions différentes, à surveiller en ce qui concerne la température, sont magnétisées différemment.

8. Système de traitement de gaz d'échappement selon l'une quelconque des revendications précédentes, **caractérisé en ce que** la magnétisation à l'état frais est réalisée différemment, en fonction de la section transversale, le long de la section transversale d'une région à surveiller.
